# EUROPEAN PATENT SPECIFICATION

(11) **EP 3 333 808 B1**
(45) Date of publication and mention of the grant of the patent: **27.10.2021**
(21) Application number: 16832571.0
(22) Date of filing: 13.05.2016
(51) Int. Cl.: G06T 19/00, G06F 3/01, G06F 3/0484, G09G 5/00, G09G 5/36, G09G 5/377

(54) **INFORMATION PROCESSING DEVICE**
INFORMATIONSVERARBEITUNGSVORRICHTUNG
DISPOSITIF DE TRAITEMENT D'INFORMATIONS

(30) Priority: 06.08.2015 JP 2015156279
(43) Date of publication of application: 13.06.2018
(73) Proprietor: Sony Interactive Entertainment Inc., Tokyo 108-0075 (JP)
(72) Inventor: SHINOHARA, Takayuki, Tokyo 108-0075 (JP)
(74) Representative: Müller Hoffmann & Partner
(86) International application number: PCT/JP2016/064273
(87) International publication number: WO 2017/022291

(56) References cited:
- JP-A- 2014 127 968
- US-A1- 2014 225 812
- US-A1- 2015 293 362

## Description

### [Technical Field]

The present invention relates to an information processing apparatus configured to display video images on a video display apparatus worn on the head of a user, a control method thereof, a control program thereof, and an information storage medium.

### [Background Art]

Like a head-mounted display, for example, a video display apparatus is known that is used as worn on the head of a user. Such a video display apparatus forms an image in front of the eyes of a user so as to enable the user to view the formed image. Since such a video display apparatus enables a user to view realistic video images, this video display apparatus is used in virtual reality technologies and so on.

Further, controlling such that a direction of the head of a user is detected so as to update an image being displayed by the above-mentioned video display apparatus in conjugation with a change in this direction can provide the user with more realistic video images. For one example, a partial range of a panoramic image obtained by shooting a scenery with a wide-angle camera is displayed on the video display apparatus and a display range inside this panoramic image is moved by following a movement of the head of a user. This setup allows the user to view this scenery with a sensation as if he or she were actually standing at the camera shooting location. In addition, while changing the direction of a virtual camera arranged in a virtual space with a movement of the head of a user, a video image indicative of a state of the virtual space as seen from the virtual camera may be displayed on the video display apparatus. Consequently, the user is provided with a video image that gives an effect as if he or she were inside the virtual space.

US 2014/0225812 A1 discloses a transmission type head mounted display that includes an image display unit that forms an image on the basis of image data and allows the formed image to be visually recognized by a user as a virtual image in a state in which the image display unit is mounted on the head of the user, a position specifying unit that specifies a target position which is a position of a specific target object relative to the image display unit, and a control unit that causes the image display unit to form a target position display image indicating the target position and that sets a position of the target position display image in an image formation region which is a region where the image display unit forms an image, on the basis of the target position specified by the position specifying unit.

JP2014127968 describes a transmissive type head mounted display which enlarges part of the displayed image.

WO2014077046 describes a non-transmissive type head mounted display.

### [Summary]

### [Technical Problem]

If, in an attempt to display an enlarged image obtained by enlarging an original image by use of the above-mentioned video display apparatus, the enlarged image is updated in the same manner as the original image by following a movement of the head of the user, a travel speed of display elements included in the image get greater than that of the original image. This sometimes makes the user feel a discomfort sensation.

Therefore, the present invention has been made by taking the above-mentioned problem into consideration so as to provide, as one of the objectives thereof, an information processing apparatus that is enabled to display, without causing a user to feel discomfort sensation, an enlarged image that is updated in conjugation with a movement of the head of the user onto a video display apparatus worn on the head of the user, a control method for the information processing apparatus, a control program of the information processing apparatus, and an information storage medium.

### [Solutions to Problem]

This is achieved by the subject-matter of the independent claims.[Brief Description of Drawings]

[FIG. 1]

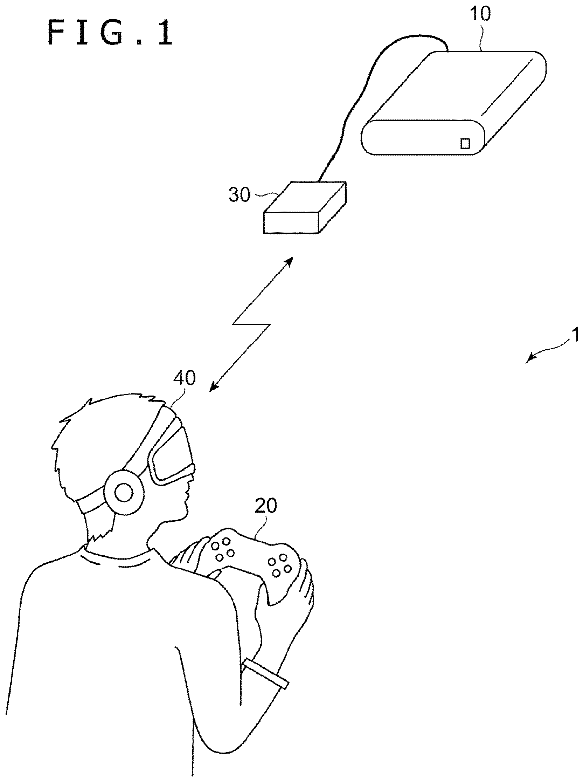

   FIG. 1 is an overall schematic diagram illustrating a video display system including an information processing apparatus related with an embodiment of the present invention.
[FIG. 2]

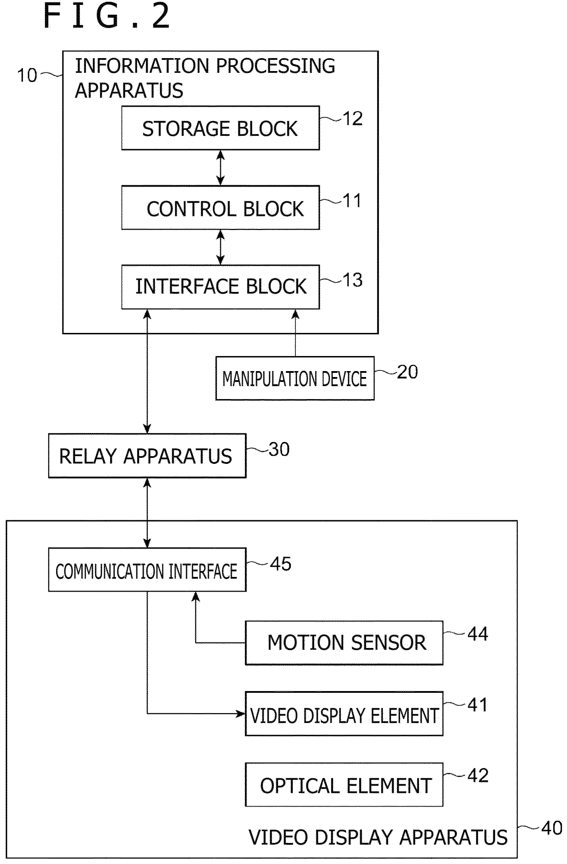

   FIG. 2 is a functional block diagram illustrating a configuration of the video display system.
[FIG. 3]

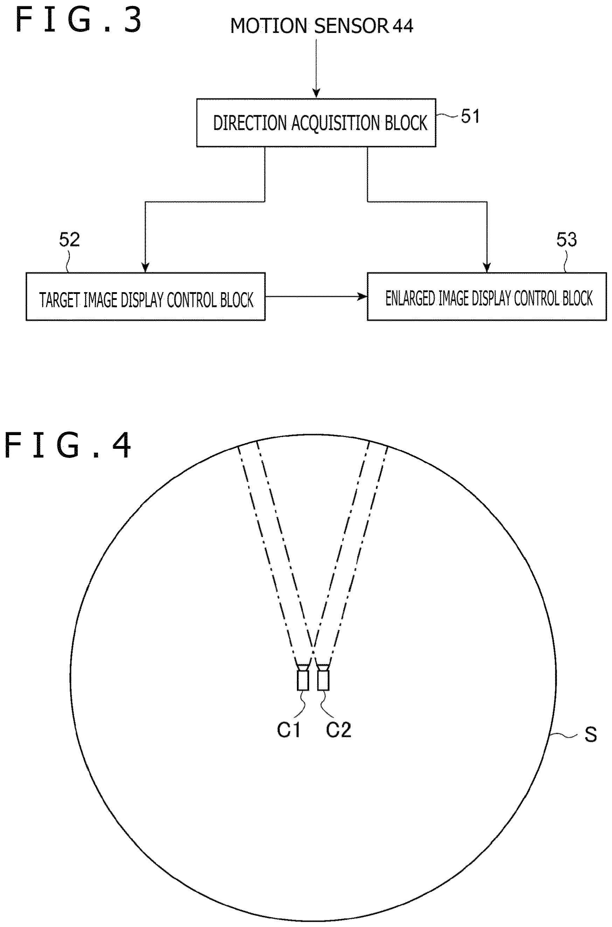

   FIG. 3 is a functional block diagram illustrating functions of an information processing apparatus.
[FIG. 4]
   FIG. 4 is a diagram describing one example of a target image generation method.
[FIG. 5]

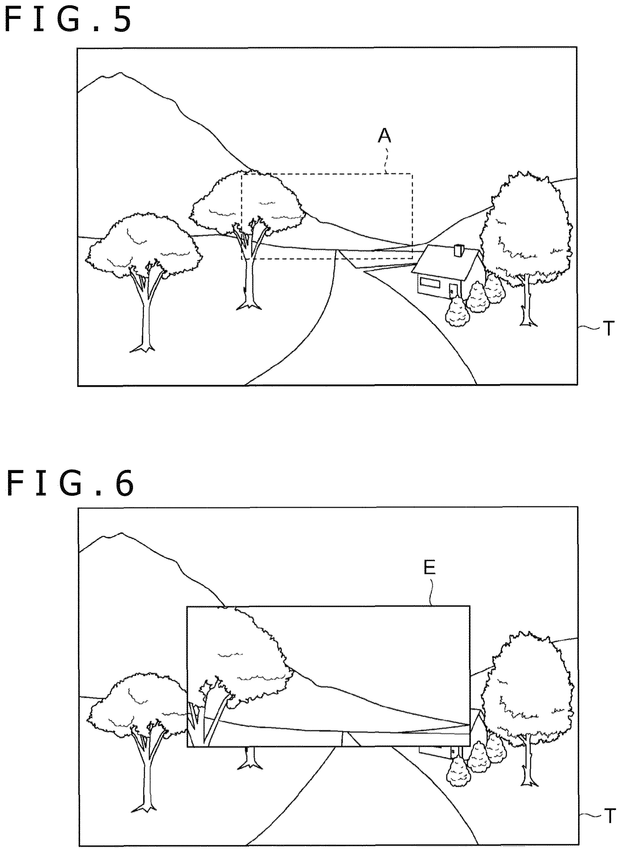

   FIG. 5 is a diagram illustrating one example of a target image that is displayed on a video display apparatus.
[FIG. 6]
   FIG. 6 is a diagram illustrating one example of an enlarged image that is displayed on the video display apparatus.
[FIG. 7]

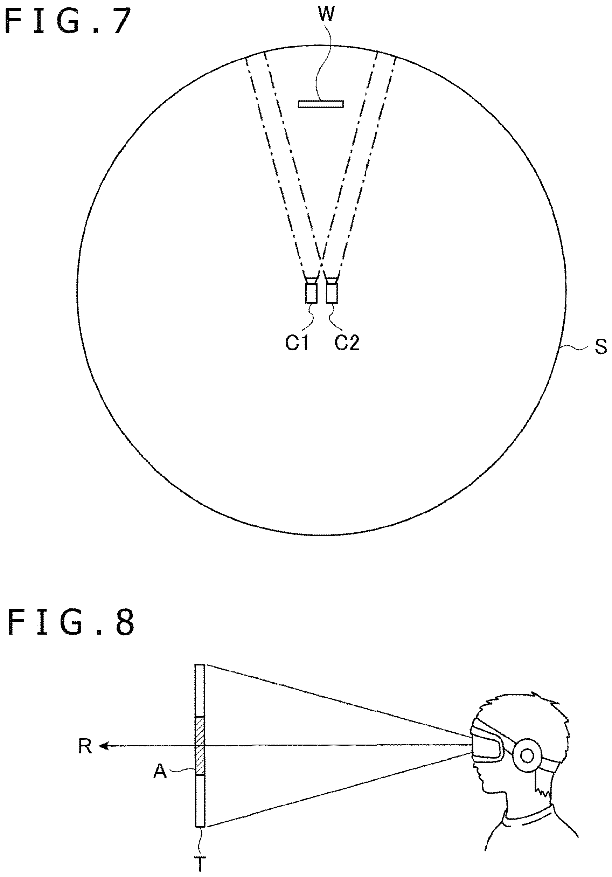

   FIG. 7 is a diagram describing one example of an enlarged image generation method.
[FIG. 8]
   FIG. 8 is a diagram illustrating an example of a position of an area to be enlarged in a state where a user directs his or her face in a horizontal direction.
[FIG. 9]

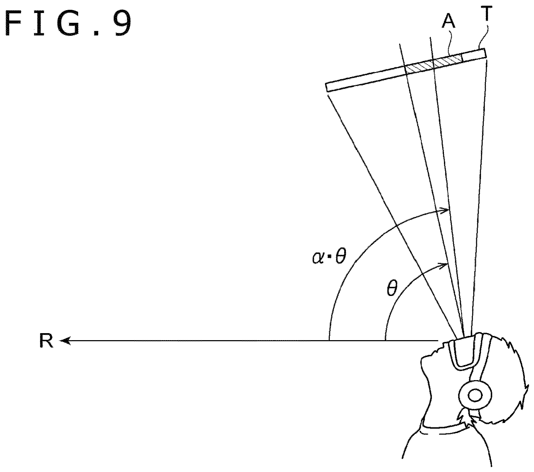

   FIG. 9 is a diagram illustrating an example of a position of an area to be enlarged in a state where a user directs his or her face in a direction near right above.

### [Description of Embodiments]

The following describes, in detail, embodiments of the present invention with reference to drawings.

Now, referring to FIG. 1, there is depicted an overall schematic diagram of a video display system 1 including an information processing apparatus 10 related with one embodiment of the present invention. FIG. 2 is a configurational block diagram illustrating a configuration of the video display system 1. As depicted in these diagrams, the video display system 1 is configured by including the information processing apparatus 10, a manipulation device 20, a relay apparatus 30, and a video display apparatus 40.

The information processing apparatus 10 is an apparatus configured to supply a video image to be displayed by the video display apparatus 40 and may be a home game machine, a portable game machine, a personal computer, a smartphone, a tablet terminal, or the like, for example. As depicted in FIG. 2, the information processing apparatus 10 is configured by including a control block 11, a storage block 12, and an interface block 13.

The control block 11 is a central processing unit (CPU) or the like, and executes programs stored in the storage block 12 so as to execute various kinds of information processing. It should be noted that specific examples of the processing to be executed by the control block 11 in the present embodiment will be described later. The storage block 12 includes a memory device such as a random access memory (RAM) and the like so as to store programs to be executed by the control block 11 and data to be processed by these programs.

The interface block 13 provides an interface for data communication between the manipulation device 20 and the relay apparatus 30. The information processing apparatus 10 is connected to the manipulation device 20 and the relay apparatus 30 via the interface block 13 in a wired or wireless manner. In one specific example, the interface block 13 may include a multimedia interface such as HDMI (High-Definition Multimedia Interface (registered trademark)) so as to transmit video and audio supplied by the information processing apparatus 10 to the relay apparatus 30. In addition, in order to receive various kinds of information from the video display apparatus 40 and transmit control signals via the relay apparatus 30, the interface block 13 may include a data communication interface such as universal serial bus (USB). Further, in order to receive a signal indicative of the contents of a manipulation input by a user done on the manipulation device 20, the interface block 13 may include a data communication interface such as USB.

The manipulation device 20 is a controller or the like of the home game machine and is used by a user to execute various instruction manipulations onto the information processing apparatus 10. The contents of a manipulation input by a user onto the manipulation device 20 are transmitted to the information processing apparatus 10 in a wired or wireless manner. It should be noted that the manipulation device 20 may include a manipulation button, a touch panel, or the like arranged on the surface of a housing of the information processing apparatus 10.

The relay apparatus 30, connected to the video display apparatus 40 in a wired or wireless manner, receives video data supplied from the information processing apparatus 10 and outputs a video signal corresponding to the received data to the video display apparatus 40. At this moment, the relay apparatus 30 may execute the processing of correcting distortions caused by an optical system of the video display apparatus 40 onto the supplied video data so as to output the corrected video signal, as necessary. It should be noted that a video signal supplied from the relay apparatus 30 to the video display apparatus 40 includes two video images for the left eye and the right eye. Further, in addition to video data, the relay apparatus 30 relays such various kinds of information that is transmitted and received between the information processing apparatus 10 and the video display apparatus 40 as audio data, control signals and the like.

The video display apparatus 40 is a video display apparatus that is used as worn on the head of a user, and displays a video image corresponding to a video signal entered from the relay apparatus 30 so as to enable the user to view the displayed video image. The present embodiment assumes that the video display apparatus 40 be compatible with the image viewing by both eyes, displaying a video image in front of each of the right and left eyes of a user. As depicted in FIG. 2, the video display apparatus 40 is configured by including a video display element 41, an optical element 42, a motion sensor 44, and a communication interface 45.

The video display element 41 is an organic electroluminescent (EL) display panel, a liquid crystal panel, or the like that displays a video image corresponding to a video signal supplied from the relay apparatus 30. In the present embodiment, the video display element 41 displays two video images for the left eye and the right eye. It should be noted that the video display element 41 may be a single display element that displays a video image for the left eye and a video image for the right eye side by side or two discrete display elements that display video images independently. Further, the video display element 41 may be a known smartphone or the like. It should be noted that, in order to realize a stereoscopic view, the video display element 41 may display video images different from each other for a video image for the left eye and a video image for the right eye. Alternatively, the video display element 41 may display same video images for a video image for the left eye and a video image for the right eye.

The optical element 42 is a hologram, a prism, a half mirror, or the like that is arranged in front of the eyes of a user and transmits or refracts beams representative of video images to be displayed by the video display element 41 so as to enter the resultant beam into the left and right eyes of the user. To be more specific, a video image for the left eye to be displayed by the video display element 41 gets in the left eye of user via the optical element 42 and a video image for the right eye gets in the right eye of the user via the optical element 42. Consequently, with the video display apparatus 40 worn on the head, the user is able to view the video image for the left eye with the left eye and the video image for the right eye with the right eye. It should be noted that the present embodiment assumes that the video display apparatus 40 be a video display apparatus of non-transmissive type that prevents the user from visually recognizing the outside state.

The motion sensor 44 measures various kinds of information associated with a position, a direction, and a motion of the video display apparatus 40. For example, the motion sensor 44 may include an acceleration sensor, a gyroscope, or a geomagnetic sensor. Measurement results obtained by the motion sensor 44 are transmitted to the information processing apparatus 10 via the relay apparatus 30. In order to identify a change in a motion and a direction of the video display apparatus 40, the information processing apparatus 10 can use the measurement results obtained by the motion sensor 44. To be more specific, the information processing apparatus 10 can detect a tilt and a translation relative to a perpendicular direction of the video display apparatus 40 by use of the measurement results obtained by an acceleration sensor. In addition, the information processing apparatus 10 can detect a rotary motion of the video display apparatus 40 by use of the measurement results obtained by a gyroscope and a geomagnetic sensor.

The communication interface 45 provides an interface for executing data communication with the relay apparatus 30. For example, if the video display apparatus 40 executes data transmission and reception with the relay apparatus 30 via a wireless local area network (LAN), Bluetooth (registered trademark), or other wireless communication, the communication interface 45 includes a communication antenna and a communication module.

The following describes functions that are realized by the information processing apparatus 10 with reference to FIG. 3. As depicted in FIG. 3, the information processing apparatus 10 functionally includes a direction acquisition block 51, a target image display control block 52, and an enlarged image display control block 53. These functions are realized by the control block 11 by executing programs stored in the storage block 12. These programs may be provided to the information processing apparatus 10 via a communication network such as the Internet or a computer-readable information storage medium such as an optical disc in storing.

The direction acquisition block 51 acquires information indicative of a direction of the video display apparatus 40 by use of measurement results of the motion sensor 44 mentioned above. To be more specific, by acquiring the measurement results obtained by the motion sensor 44 at constant time intervals, the direction acquisition block 51 identifies a direction of the video display apparatus 40 at the time of information acquisition. Since the video display apparatus 40 is used as fixed to the head of the user, the direction of this video display apparatus 40 directly corresponds to a direction of the face of the user. In a specific example, a direction of the video display apparatus 40 is expressed by a yaw angle indicative of a rotational amount, a vertical direction (an up-down direction) of rotational axis, a pitch angle indicative of a rotational amount, a left-right direction of rotational axis, and a roll angle indicative of a rotational amount, a forward-backward direction of rotational axis. In this case, the values of yaw angle and pitch angle may be those which are indicative of rotational amounts relative to a reference direction R that is the direction of the video display apparatus 40 with the user directed right in front, for example. The reference direction R may be a direction that is determined at the time of starting the use of the video display apparatus 40, for example. In addition, the value of roll angle may be indicative of a rotational amount from a reference state that is a state in which the left and right eyes are horizontal without user's tilting the neck.

It should be noted that, in this example, the direction acquisition block 51 uses the measurement results obtained by the motion sensor 44 built in the video display apparatus 40 so as to identify a direction of the video display apparatus 40. However, instead of this arrangement or in addition thereto, information obtained by other means may be used for the identification of a direction of the video display apparatus 40. For example, the information processing apparatus 10 may be connected with a camera through which the video display apparatus 40 is imaged. By identifying a position and a direction of the video display apparatus 40 included in this taken image, the direction acquisition block 51 can acquire the information related with the direction of the video display apparatus 40. In this case, by arranging two or more light-emitting elements on the surface of the housing of the video display apparatus 40, imaging the light emitted from these light-emitting elements by use of a camera, and identifying a position of this light, the direction acquisition block 51 can accurately identify the direction of the video display apparatus 40 by use of the image taken with the camera.

The target image display control block 52 generates a target image T to be displayed and outputs the generated target image T to the relay apparatus 30, thereby having the video display apparatus 40 display the target image T. In a specific example, it is assumed that this target image T be an image indicative of a state inside a predetermined visual field range generated on the basis of a panoramic image obtained by imaging an actual scenery by use of a omnidirectional camera or the like. The panoramic image in this case is an image that includes a sphere of an omnidirectional (all directions; forward and backward, right and left, and up and down) sphere generated by a data format such as equidistant cylindrical projection, for example. It should be noted here that a panoramic image is assumed to include a right panoramic image for use in generating an image for the right eye and a left panoramic image for use in generating an image for the left eye. These two panoramic images can be generated by imaging an actual scenery with two omnidirectional cameras arranged in a left-right direction, for example. The visual field range is a range that is defined from the omnidirectional sphere in accordance with a yaw angle, a pitch angle, and a roll angle indicative of a direction of the video display apparatus 40 acquired by the direction acquisition block 51.

To be more specific, the target image display control block 52 arranges a sphere S inside a virtual space and, at the same time, arranges two virtual cameras C1 and C2 arranged in a left-right direction. FIG. 4 illustrates a state in which a virtual space is seen from a zenith direction with the sphere S and the virtual cameras C1 and C2 arranged. Further, the target image display control block 52 generates an image for the left eye by attaching a texture generated on the basis of a left panoramic image onto the inside of the sphere S and drawing a state in which the sphere S is seen with this texture being attached from the virtual camera C1. Likewise, the target image display control block 52 generates an image for the right eye by attaching a texture generated on the basis of a right panoramic image onto the inside of the sphere S and drawing a state in which the sphere S is seen with this texture being attached from the virtual camera C2. Here, the directions of the virtual cameras C1 and C2 are determined in accordance with a direction of the video display apparatus 40 and a visual field range to be drawn is determined by the directions of the virtual cameras C1 and C2. A target image T is configured by including the two images for the left and right eyes generated as described above. When this target image T is displayed by the video display apparatus 40, the user can view a scenery on the panoramic image.

Further, in the present embodiment, in accordance with a change in the direction of the video display apparatus 40 acquired by the direction acquisition block 51, the target image display control block 52 updates the target image T to be displayed on a real-time basis. To be more specific, if a change occurs in the direction of the video display apparatus 40, the target image display control block 52 changes the directions of the virtual cameras C1 and C2 in the direction corresponding to the changed direction. For example, if a change occurs in the pitch angle and the yaw angle of the video display apparatus 40, the target image display control block 52 changes the imaging directions of both the virtual cameras C1 and C2 in conjugation with this change. Further, if a change occurs in the roll angle of the video display apparatus 40, the virtual cameras C1 and C2 arranged in the left-right direction are tilted around the center of the sphere S in conjugation with this change. Consequently, the visual field range of the virtual cameras C1 and C2 changes in conjugation with the change in the direction of the video display apparatus 40. The target image display control block 52 updates the target image T by redrawing the state of the inside surface of the sphere S on the basis of the updated visual field range and displays the updated target image T on the video display apparatus 40. The target image display control block 52 repetitively executes the above-mentioned redrawing (update) processing on the target image T in accordance with the change in the direction of the video display apparatus 40 at predetermined time intervals. According to the control processing described above, a target image T can be updated in the same manner as that a scenery change takes place as the user moves his or her face when the user is looking at a real scenery. Hence, this setup gives the user a realistic sensation as if the user were there.

The enlarged image display control block 53 has the video display apparatus 40 display an enlarged image E with a part of a target image T enlarged. It should be noted that, in what follows, an area inside a target image T to be enlarged is referred to as an enlarged target area A. For example, if the user executes a manipulation input for instructing the manipulation device 20 for enlarged display, the enlarged image display control block 53 generates an enlarged image E with the enlarged target area A inside the target image T displayed at that time and has the video display apparatus 40 display the generated enlarged image E. At this moment, the magnification of the enlarged image E may be a predetermined value or determined in accordance with a manipulation amount at the time when the user gives an instruction for enlargement. In the latter case, in order to keep the size of the enlarged image E to be constant, the size of the enlarged target area A may be made smaller as the magnification gets larger.

Especially, in the present embodiment, the enlarged image display control block 53 does not have the video display apparatus 40 display an enlarged image E all over the display area but display an enlarged image E such that the enlarged image E occupies only a partial area overlapping the enlarged target area A. That is, an enlarged image E is displayed as superimposed on a target image T in a size smaller than that of the entire display area in which the target image T is displayed. Eventually, the target image T is kept displayed in an area around the enlarged image E.

FIGS. 5 and 6 are diagrams indicative of how an enlarged image E is seen from a user. To be more specific, FIG. 5 is indicative of an example of display of a target image T before an enlarged image E is displayed. FIG. 6 is indicative of an example of a state in which an enlarged image E is displayed from the state depicted in FIG. 5 upon an instruction from the user. It should be noted that the dashed lines in FIG. 5 are indicative of an enlarged target area A. As depicted in FIG. 6, an enlarged image E is displayed so as to be superimposed on a target image T in the forward and the target image T displayed in FIG. 5 is displayed without change around the enlarged image E. It should also be noted that in this diagram example, the center of the enlarged target area A matches the center of the target image T and the enlarged image E is accordingly arranged with the center thereof matching the center of the target image T. In addition, as depicted in FIG. 6, the enlarged image display control block 53 may display the enlarged image E as enclosed with frame lines so as to provide clear distinction from the target image T.

When the user changes the direction of his or her face with the illustrated enlarged image E displayed in FIG. 6, both the target image T and the enlarged image E are updated in conjugation therewith. To be more specific, the target image display control block 52 updates the target image T in the similar manner to a state in which only the target image T was displayed. Then, the enlarged image display control block 53 displays the enlarged image E obtained by enlarging the enlarged target area A in the proximity of the center of the always displayed target image T in conjugation with a change in the target image T. This control operation allows the display elements inside the enlarged image E to move faster than the display elements inside the target image T because the former elements are enlarged. However, since the enlarged image E does not occupy the entire display area of the video display apparatus 40 and the target image T therearound is updated similarly as before, the user is able to view the enlarged image E that is updated by following the motion of his or her face without feeling discomfort sensation.

It should be noted that, when the enlarged image E is displayed, the target image display control block 52 may execute blur processing on the target image T. This makes it easy for the user to pay attention to the enlarged image E because the target image T is displayed in a blurred manner while the enlarged image E is displayed.

Further, if the enlarged image E is displayed on the video display apparatus 40 as a stereoscopic video image, the enlarged image display control block 53 may provide control such that the enlarged image E is seen at a position closer to the user than that of the target image T (a position of which distance from the user along the depth direction is shorter). To be more specific, the enlarged image display control block 53 determines a position of the enlarged image E included in each of the images for the right eye and for the left eye such that a parallax between the enlarged images E in the image for the right eye and the image for the left eye displayed on the video display apparatus 40 gets larger than that between the target images T. FIG. 7 is a diagram for describing one example of a drawing method for realizing such a display manner. Here, a window W is arranged at a position nearer to the virtual cameras C1 and C2 than the inner surface of the virtual sphere S inside of the sphere S. It should be noted that the polar coordinate of the window W arranged position in this example is determined such that the polar coordinate is positioned at the center of the visual field range of the virtual cameras C1 and C2. The enlarged image display control block 53 attaches the enlarged image E obtained by enlarging the enlarged target area A onto the window W as texture. In this state, the target image display control block 52 draws a state in which the window W and the inner surface of the sphere S are seen from each the virtual cameras C1 and C2 so as to generate an image for the right eye and an image for the left eye included in the target image T. Consequently, the enlarged image E looks floating at a position forward nearer than the target image T, so that the user can view the enlarged image E without feeling discomfort sensation.

When updating the enlarged image E in accordance with a change in the direction of the video display apparatus 40, the enlarged image display control block 53 may ignore a slight change in the direction of the video display apparatus 40, in order to be seen a display position of the enlarged image E with stability. A control operation such as this can be realized by the similar processing to the image stabilization of cameras. To be more specific, while a variation amount of values (here, a pitch angle and a yaw angle) indicative of a direction of the video display apparatus 40 is less than a predetermined threshold value, the enlarged image display control block 53 may not update the display of the enlarged image E. In another approach, lowpass filtering may be executed on the values of a pitch angle and a yaw angle acquired at predetermined time intervals, thereby preventing these values from abruptly changing. A control operation such as this allows the prevention of frequent updating of the display contents of the enlarged image E due to unconscious slight face motions of the user, thereby making it easy for the user to view the enlarged image E.

In the above description, the centers of the enlarged target area A and the enlarged image E are assumed to match the center of the target image T. However, the position of the enlarged target image A in the target image T and the display position of the enlarged image E may be shifted from the center of the target image T. Especially, as the direction of the video display apparatus 40 is shifted from a reference direction R, the enlarged image display control block 53 may provide control such that the enlarged target area A approaches from the center of the target image T to the periphery thereof.

The following describes an example in which a position of the enlarged target area A as described above is controlled. Here, it is assumed that a position of the enlarged target area A be shifted from the center of the target image T along an up-down direction when the user changes the direction of his or her face along an up-down direction (namely, when a pitch angle is changed).

In this example, it is assumed that, if the direction of the video display apparatus 40 is not changed from the reference direction R, the center position of the enlarged target area A matches the center of the target image T. On the other hand, if the user moves the face in an up direction or a down direction, the center position of the enlarged target area A moves near the periphery of the target image T. To be more specific, if the pitch angle of the video display apparatus 40 becomes θ°, then the center position of the enlarged target area A is determined so as to match the center position of the target image T to be displayed when the pitch angle of the video display apparatus 40 becomes (α·θ)°. Here, α is a correction coefficient greater than 1.

FIG. 8 and FIG. 9 are diagrams for describing the position control of the enlarged target area A in this example in which, of the omnidirectional sceneries represented by a panoramic image, a range displayed as the target image T and a range displayed as the enlarged target area A are illustrated. These diagrams each depict a case in which a user is seen sideways; FIG. 8 depicts an example of a state in which the user directs his or her face in a horizontal direction (the reference direction R) and FIG. 9 depicts an example of a state in which the user directs the face in a direction near the right upward. In FIG. 8, the center of the target image T and the center of the enlarged target area A match each other; however, in FIG. 9, the center of the enlarged target area A is shifted upward from the center of the target image T. Thus, by moving the center position of the enlarged target area A toward the upper side of the target image T as the user directs the face upward, the user is able to enlarge and view the scenery in the azimuth direction without fully directing the face right upward. Here, it is also assumed that, if the user directs the face downward, the enlarged image display control block 53 provides control such that the center of the enlarged target area A moves toward the lower side of the target image T as with the case in which the user directs the face upward. In general, since it involves some difficulty for people to move the face right upward or right downward, the above-mentioned control makes it easy to view the enlarged image E in the right up or right down direction.

Further, if the user changes the direction of his or her face from the reference direction R to a left-right direction, the center of the enlarged target area A may be moved to the direction in which the user directs the face relative to the center of the target image T. According to such a control operation, if the user directs the face in a direction away from the front of the user, it is made easy to view the scenery in that direction as the enlarged image E. It should be noted that, in the above-mentioned example, the enlarged image display control block 53 is assumed to display the enlarged image E such that the center of the enlarged image E matches the center of the enlarged target area A. However, it is also practicable for the enlarged image display control block 53 to determine a display position in the target image T of the enlarged image E so as to shift the center of the enlarged image E from the center of the enlarged target area A. For example, if the center of the enlarged target area A is shifted from the center of the target image T, the enlarged image display control block 53 may maintain a state in which the center of the enlarged image E is in match with the center of the target image T.

It should be noted that, in displaying the enlarged image E in a state where the user tilts his or her face (namely, in a state where the roll angle of the video display apparatus 40 changes from a reference state), the enlarged image display control block 53 may provide control such that the direction along the horizontal direction of the enlarged image E remains unchanged. For example, as depicted in FIG. 7, if the window W is arranged inside the sphere S, the enlarged image display control block 53 changes the polar coordinate of the window W in accordance with changes in the yaw angle and the pitch angle of the video display apparatus 40, while the enlarged image display control block 53 maintains the direction of the window W without rotation thereof also when the virtual cameras C1 and C2 are rotated in conjugation with a change in the roll angle of the video display apparatus 40. This arrangement has the display area of the enlarged image E inside the target image T displayed as rotated in opposite to the tilt of the face by the same rotational amount. According to such a control operation, the direction of the enlarged image E is always maintained along the horizontal direction regardless of the tilt of the video display apparatus 40.

It should also be note that the enlarged image display control block 53 ends displaying the enlarged image E in accordance with an instructive manipulation executed by the user through the manipulation device 20, for example. In addition, if the direction of the video display apparatus 40 changes from the direction at the time of starting displaying the enlarged image E by a predetermined angle or more, the enlarged image display control block 53 may end displaying the enlarged image E. Also, if a predetermined object displayed inside the target image T is being displayed in an enlarged mode and the enlarged target area A moves to a position not including this object, the displaying of the enlarged image E may be ended.

According to the information processing apparatus 10 related with the present embodiment described so far, the enlarged image E can be presented to the user without making the user feel discomfort sensation by overlapping the enlarged image E with a size smaller than that of the display area of the target image T on the target image T.

It should be noted that embodiments of the present invention are not limited to that described above. For example, in the description done above, the target image T is generated on the basis of a panoramic image that is a still image containing a omnidirectional sphere; however, it is also practicable that the target image display control block 52 generates the target image T that is updated from time to time on the basis of a panoramic video changing with time. In addition, the target image T may be generated on the basis of a panoramic image or a panoramic video image that contains a scenery in a narrower range than the omnidirectional sphere.

Further, if the target image display control block 52 displays the target image T generated on the basis of a panoramic video changing with time, the enlarged image display control block 53 may move the enlarged target area A with time in accordance with a change in the target image T. For example, the enlarged image display control block 53 identifies an object of attention displayed inside the target image T (such objects moving relatively to different backgrounds as animals and vehicles, for example) so as to provide an area including this object of attention as the enlarged target area A. This processing is repetitively executed at predetermined time intervals so as to accordingly update the position of the enlarged target area A, thereby automatically tracing the object of attention, and enlarging and displaying the traced object of attention.

In addition, the target image display control block 52 may generate the target image T indicative of a state inside a virtual space rather than generating the target image T from a panoramic image indicative of a real scenery. In this case, the target image display control block 52 builds a virtual three-dimensional space with various objects indicative of characters and backgrounds arranged and arranges virtual cameras therein. Then, the target image T indicative of a state seen from these virtual cameras into the virtual space is generated. In this case, too, as with the above-mentioned example in which the target image T is generated from a panoramic image, the target image display control block 52 arranges two virtual cameras disposed in a left-right direction in a virtual space and generates an image indicative of a state seen from each of these two cameras into the virtual space. Thus, an image for the right eye and an image for the left eye that are necessary for providing a stereoscopic view can be generated as the target image T. Further, if the direction of the video display apparatus 40 changes, the target image display control block 52 changes the directions of the virtual cameras arranged inside the virtual space in conjugation with that change and updates the target image T on the basis of the changed directions of the virtual cameras. Consequently, the user is able to view a state inside the virtual space as if the user were inside the virtual space. In this case, too, the enlarged image display control block 53 may provide, as the enlarged target area A, an area inside the target image T in which an object of attention inside the virtual space is displayed. Consequently, the object of attention can be automatically traced and displayed as the enlarged image E.

Further, the processing such as the correction of videos that is realized by the relay apparatus 30 as described above may be realized by the information processing apparatus 10. Conversely, at least a part of the processing that is realized by the information processing apparatus 10 as described above may be realized by the relay apparatus 30. Also, a part of the processing that is realized by the relay apparatus 30 as described above may be realized by an integrated circuit built in the video display apparatus 40. In addition, if all of the processing operations that are realized by the relay apparatus 30 as described above are realized by one of the information processing apparatus 10 and the video display apparatus 40, the relay apparatus 30 may not be arranged.

### [Reference Signs List]

1 ... Video display system, 10 ... Information processing apparatus, 11 ... Control block, 12 ... Storage block, 13 ... Interface block, 20 ... Manipulation device, 30 ... Relay apparatus, 40 ... Video display apparatus, 41 ... Video display element, 42 ... Optical element, 44 ... Motion sensor, 45 ... Communication interface, 51 ... Direction acquisition block, 52 ... Target image display control block, 53 ... Enlarged image display control block

## Claims

1. An information processing apparatus (10) connected to a video display apparatus (40) worn on a head of a user, the information processing apparatus (10) comprising:
an acquisition block (51) configured to acquire a direction of the video display apparatus (40);
a target image display control block (52) configured to display a target image updated in accordance with a change in the acquired direction of the video display apparatus (40) onto the video display apparatus (40); and
an enlarged image display control block (53) configured to display an enlarged image obtained by enlarging a part of the target image onto the video display apparatus (40), wherein
the enlarged image display control block (53) is configured to display the enlarged image by superimposing the enlarged image on the target image with a size smaller than that of a display area of the target image,
the video display apparatus (40) is configured to display an image for the right eye and an image for the left eye, and
the enlarged image display control block (53) is configured to provide control such that a parallax in the enlarged image between the image for the right eye and the image for the left eye is greater than a parallax in the target image.

2. The information processing apparatus (10) according to claim 1, wherein
the target image display control block (52) is configured to execute, while the enlarged image is displayed, blurring processing on the target image before being displayed.

3. The information processing apparatus (10) according to claim 1, wherein
the enlarged image display control block (53) is configured to display, as the enlarged image, an image obtained by enlarging an enlarged target area that is a part of the target image, if the acquired direction of the video display apparatus (40) matches a predetermined reference direction, the enlarged image display control block (53) is configured to match a center of the enlarged target area with a center of the target image and, if the acquired direction of the video display apparatus (40) shifts from the reference direction, is configured to shift the center of the enlarged target area to a position near an outer periphery of the target image.

4. The information processing apparatus (10) according to claim 1, wherein
if the acquired direction of the video display apparatus (40) matches a predetermined reference direction, the enlarged image display control block (53) is configured to display the enlarged image at a center of a display area of the target image and, if the acquired direction of the video display apparatus shifts from the predetermined reference direction, is configured to shift a display position of the enlarged image to a position near an outer periphery of the target image.

5. A video display system comprising:
a video display apparatus (40) worn on a head of a user; and
the information processing apparatus (10) according to one of the preceding claims.

6. A control method for an information processing apparatus (10) connected to a video display apparatus (40) worn on a head of a user, the control method comprising:
an acquiring step of acquiring a direction of the video display apparatus (40);
a target image displaying step of displaying a target image updated in accordance with a change in the acquired direction of the video display apparatus (40) onto the video display apparatus (40); and
an enlarged image displaying step of displaying an enlarged image obtained by enlarging a part of the target image onto the video display apparatus (40), wherein
the enlarged image displaying step displays the enlarged image by superimposing the enlarged image on the target image with a size smaller than that of a display area of the target image, and
the video display apparatus (40) is configured to displays an image for the right eye and an image for the left eye, and
the enlarged image display control step provides control such that a parallax in the enlarged image between the image for the right eye and the image for the left eye is greater than a parallax in the target image.

7. A program for causing a computer connected to a video display apparatus (40) worn on a head of a user, if executed on the computer, to carry out the method of claim 6.

8. A computer-readable information storage medium storing the program according to claim 7.

## Patentansprüche

1. Informationsverarbeitungsvorrichtung (10), die mit einer Videoanzeigevorrichtung (40) verbunden ist, die an einem Kopf eines Benutzers getragen wird, wobei die Informationsverarbeitungsvorrichtung (10) Folgendes umfasst:
einen Erfassungsblock (51), der dazu ausgebildet ist, eine Richtung der Videoanzeigevorrichtung (40) zu erfassen;
einen Steuerblock (52) für die Anzeige eines Zielbildes, der dazu ausgebildet ist, ein Zielbild, das im Einklang mit einer Änderung der erfassten Richtung der Videoanzeigevorrichtung (40) aktualisiert wurde, auf der Videoanzeigevorrichtung (40) anzuzeigen; und
einen Steuerblock für die Anzeige eines vergrößerten Bildes (53), der dazu ausgebildet ist, ein vergrößertes Bild, das durch Vergrößerung eines Teils des Zielbildes erhalten wird, auf der Videoanzeigevorrichtung (40) anzuzeigen, wobei
der Steuerblock (53) für die Anzeige des vergrößerten Bildes dazu ausgebildet ist, das vergrößerte Bild durch Überlagerung des vergrößerten Bildes auf dem Zielbild mit einer Größe anzuzeigen, die kleiner als die eines Anzeigebereichs des Zielbildes ist,
die Videoanzeigevorrichtung (40) dazu ausgebildet ist, ein Bild für das rechte Auge und ein Bild für das linke Auge anzuzeigen, und
der Steuerblock (53) für die Anzeige eines vergrößerten Bildes dazu ausgebildet ist, eine Steuerung bereitzustellen, so dass eine Parallaxe in dem vergrößerten Bild zwischen dem Bild für das rechte Auge und dem Bild für das linke Auge größer als eine Parallaxe in dem Zielbild ist.

2. Informationsverarbeitungsvorrichtung (10) gemäß Anspruch 1, wobei
der Steuerblock (52) für die Anzeige des Zielbildes dazu ausgebildet ist, während der Anzeige des vergrößerten Bildes eine Unschärfeverarbeitung an dem Zielbild auszuführen, bevor es angezeigt wird.

3. Informationsverarbeitungsvorrichtung (10) gemäß Anspruch 1, wobei
der Steuerblock (53) für die Anzeige eines vergrößerten Bildes dazu ausgebildet ist, ein durch Vergrößerung eines vergrößerten Zielbereichs, der ein Teil des Zielbildes ist, erhaltenes Bild als das vergrößerte Bild anzuzeigen, falls die erfasste Richtung der Bildanzeigevorrichtung (40) mit einer vorbestimmten Referenzrichtung übereinstimmt,
der Steuerblock (53) für die Anzeige eines vergrößerten Bildes dazu ausgebildet ist, eine Mitte des vergrößerten Zielbereichs mit einer Mitte des Zielbildes abzugleichen, und, falls sich die erfasste Richtung der Bildanzeigevorrichtung (40) von der Bezugsrichtung verschiebt, dazu ausgebildet ist, die Mitte des vergrößerten Zielbereichs zu einer Position in der Nähe eines Außenumfangs des Zielbildes zu verschieben.

4. Informationsverarbeitungsvorrichtung (10) gemäß Anspruch 1, wobei,
falls die erfasste Richtung der Videoanzeigevorrichtung (40) mit einer vorbestimmten Bezugsrichtung übereinstimmt, der Steuerblock (53) für die Anzeige des vergrößerten Bildes dazu ausgebildet ist, das vergrößerte Bild in einer Mitte eines Anzeigebereichs des Zielbildes anzuzeigen, und falls die erfasste Richtung der Videoanzeigevorrichtung sich von der vorbestimmten Bezugsrichtung verschiebt, dazu ausgebildet ist, eine Anzeigeposition des vergrößerten Bildes zu einer Position in der Nähe eines Außenumfangs des Zielbildes zu verschieben.

5. Videoanzeigesystem, das Folgendes umfasst:
eine Videoanzeigevorrichtung (40), die am Kopf eines Benutzers getragen wird; und
die Informationsverarbeitungsvorrichtung (10) gemäß einem der vorausgehenden Ansprüche.

6. Steuerverfahren für eine Informationsverarbeitungsvorrichtung (10), die mit einer am Kopf eines Benutzers getragenen Videoanzeigevorrichtung (40) verbunden ist, wobei das Steuerverfahren Folgendes umfasst:
einen Schritt des Erfassens einer Richtung der Videoanzeigevorrichtung (40);
einen Schritt des Anzeigens eines Zielbildes, das im Einklang mit einer Änderung der erfassten Richtung der Videoanzeigevorrichtung (40) aktualisiert wurde, auf der Videoanzeigevorrichtung (40); und
einen Schritt des Anzeigens eines vergrößerten Bildes, das durch Vergrößern eines Teils des Zielbildes erhalten wird, auf der Videoanzeigevorrichtung (40), wobei
der Schritt des Anzeigens des vergrößerten Bildes das vergrößerte Bild durch Überlagerung des vergrößerten Bildes auf dem Zielbild mit einer Größe anzeigt, die kleiner als die eines Anzeigebereichs des Zielbildes ist, und
die Videoanzeigevorrichtung (40) dazu ausgebildet ist, ein Bild für das rechte Auge und ein Bild für das linke Auge anzuzeigen, und
der Steuerschritt für die Anzeige des vergrößerten Bildes eine Steuerung bereitstellt, so dass eine Parallaxe in dem vergrößerten Bild zwischen dem Bild für das rechte Auge und dem Bild für das linke Auge größer als eine Parallaxe in dem Zielbild ist.

7. Programm, das, falls es auf einem Computer ausgeführt wird, den Computer veranlasst, das Verfahren nach Anspruch 6 auszuführen, wenn dieser mit einer am Kopf eines Benutzers getragenen Videoanzeigevorrichtung (40) verbunden ist.

8. Computerlesbares Informationsspeichermedium, das das Programm gemäß Anspruch 7 speichert.

## Revendications

1. Appareil de traitement d'informations (10) connecté à un appareil d'affichage vidéo (40) porté sur la tête d'un utilisateur, l'appareil de traitement d'informations (10) comprenant :
un bloc d'acquisition (51) configuré pour acquérir une direction de l'appareil d'affichage vidéo (40) ;
un bloc de commande d'affichage d'image cible (52) configuré pour afficher une image cible mise à jour en fonction d'un changement de la direction acquise de l'appareil d'affichage vidéo (40) sur l'appareil d'affichage vidéo (40) ; et
un bloc de commande d'affichage d'image agrandie (53) configuré pour afficher une image agrandie obtenue en agrandissant une partie de l'image cible sur l'appareil d'affichage vidéo (40), dans lequel
le bloc de commande d'affichage d'image agrandie (53) est configuré pour afficher l'image agrandie en superposant l'image agrandie à l'image cible avec une taille inférieure à celle d'une zone d'affichage de l'image cible,
l'appareil d'affichage vidéo (40) est configuré pour afficher une image destinée à l'œil droit et une image destinée à l'œil gauche, et
le bloc de commande d'affichage d'image agrandie (53) est configuré pour fournir une commande de telle manière qu'une parallaxe dans l'image agrandie entre l'image destinée à l'œil droit et l'image destinée à l'œil gauche soit supérieure à une parallaxe dans l'image cible.

2. Appareil de traitement d'informations (10) selon la revendication 1, dans lequel
le bloc de commande d'affichage d'image cible (52) est configuré pour exécuter, pendant que l'image agrandie est affichée, un traitement de flou sur l'image cible avant qu'elle soit affichée.

3. Appareil de traitement d'informations (10) selon la revendication 1, dans lequel
le bloc de commande d'affichage d'image agrandie (53) est configuré pour afficher, en tant qu'image agrandie, une image obtenue en agrandissant une zone cible agrandie qui est une partie de l'image cible, si la direction acquise de l'appareil d'affichage vidéo (40) coïncide avec une direction de référence prédéterminée, le bloc de commande d'affichage d'image agrandie (53) est configuré pour faire coïncider un centre de la zone cible agrandie avec un centre de l'image cible et, si la direction acquise de l'appareil d'affichage vidéo (40) se décale par rapport à la direction de référence, il est configuré pour décaler le centre de la zone cible agrandie vers une position proche d'une périphérie extérieure de l'image cible.

4. Dispositif de traitement d'informations (10) selon la revendication 1, dans lequel
si la direction acquise de l'appareil d'affichage vidéo (40) coïncide avec une direction de référence prédéterminée, le bloc de commande d'affichage d'image agrandie (53) est configuré pour afficher l'image agrandie au centre d'une zone d'affichage de l'image cible et, si la direction acquise de l'appareil d'affichage vidéo est décalée par rapport à la direction de référence prédéterminée, il est configuré pour décaler une position d'affichage de l'image agrandie vers une position proche d'une périphérie extérieure de l'image cible.

5. Système d'affichage vidéo comprenant :
un appareil d'affichage vidéo (40) porté sur la tête d'un utilisateur ; et
l'appareil de traitement d'informations (10) selon l'une des revendications précédentes.

6. Procédé de commande destiné à un appareil de traitement d'informations (10) connecté à un appareil d'affichage vidéo (40) porté sur la tête d'un utilisateur, le procédé de commande comprenant :
une étape d'acquisition consistant à acquérir une direction de l'appareil d'affichage vidéo (40) ;
une étape d'affichage d'image cible consistant à afficher une image cible mise à jour en fonction d'un changement de la direction acquise de l'appareil d'affichage vidéo (40) sur l'appareil d'affichage vidéo (40) ; et
une étape d'affichage d'image agrandie consistant à afficher une image agrandie obtenue en agrandissant une partie de l'image cible sur l'appareil d'affichage vidéo (40), dans lequel
l'étape d'affichage d'image agrandie affiche l'image agrandie en superposant l'image agrandie à l'image cible avec une taille inférieure à celle d'une zone d'affichage de l'image cible, et
l'appareil d'affichage vidéo (40) est configuré pour afficher une image destinée à l'œil droit et une image destinée à l'œil gauche, et
l'étape de commande d'affichage d'image agrandie fournit une commande de telle manière qu'une parallaxe dans l'image agrandie entre l'image destinée à l'œil droit et l'image destinée à l'œil gauche soit supérieure à une parallaxe dans l'image cible.

7. Programme destiné à amener un ordinateur connecté à un dispositif d'affichage vidéo (40) porté sur la tête d'un utilisateur, s'il est exécuté sur l'ordinateur, à mettre en œuvre le procédé selon la revendication 6.

8. Support de stockage d'informations lisible par ordinateur stockant le programme selon la revendication 7.
